# EUROPÄISCHE PATENTSCHRIFT

(11) **EP 0 685 610 B1**
(45) Veröffentlichungstag und Bekanntmachung des Hinweises auf die Patenterteilung: **17.07.2002**
(21) Anmeldenummer: 95106287.6
(22) Anmeldetag: 27.04.1995
(51) Int. Cl.: E04C 3/06, B21D 47/04, B21D 19/00, B21B 1/08, B23K 26/00

(54) **Aus einem Steg und mindestens einem Flansch durch Strahlungsenergie zusammengeschweisster Profilträger aus Metall, insbesondere Stahl und Verfahren zu seiner Herstellung**
Girder made of metal, in particular of steel, manufactured from a web and at least one flange, by welding them together using radiant energy and a method of manufacturing the same
Poutrelle en métal, notamment en acier fabriquée à partir d'une âme et d'au moins une aile soudées par énergie rayonnante et procédé pour sa fabrication

(30) Priorität: 03.06.1994 DE 4419349
(43) Veröffentlichungstag der Anmeldung: 06.12.1995
(73) Patentinhaber: ThyssenKrupp Stahl AG, 47166 Duisburg (DE)
(72) Erfinder: Behr, Friedrich, Prof. Dr.-Ing. habil., D-47804 Krefeld (DE)
(74) Vertreter: Cohausz & Florack

(56) Entgegenhaltungen:
- EP-A- 0 383 746
- EP-A- 0 445 633
- DE-A- 2 056 301
- DE-A- 3 432 926
- DE-B- 1 609 905
- GB-A- 439 940
- US-A- 2 353 289
- US-A- 3 402 586
- PATENT ABSTRACTS OF JAPAN vol. 14, no. 339 (M-1001) 23. Juli 1990 & JP-A-02 117 782 (NIPPON STEEL) 2. Mai 1990

## Beschreibung

Bei Profilträgern in Form von T- und H-Profilen handelt es sich grundsätzlich um warmgewalzte Profile. Solche Profile müssen nach der Warmumformung gerichtet werden. die Dauerfestigkeit und Tragfähigkeit dieser Profile hängt bei gegebener geometrischer Dimension vom Metall ab. Das Verhältnis von Festigkeit warmgewalzter Profile und Materialeinsatz ist wegen der verhältnismäßig geringen Festigkeit des Materials nicht optimal.

Daneben sind aber auch Profilträger in Form von T- und H-Profilen bekannt (JP 21 17 782; EP 0 445 633 A1; DE 2 056 301 A1), die aus einem als Steg dienenden Metallstreifen und einem bzw. zwei als Flansch(e) dienenden Metallstreifen durch Längsnahtschweißen mit Strahlungsenergie hergestellt sind. Dabei ist die Schmalseite des Stegs mit der Breitseite des Flanschs verbunden. Insbesondere kann die anzuschweißende Schmalseite vor dem Schweißen vorbehandelt sein. So kann sie prismatisch verformt sein, wenn auch in der Breitseite des Flansches eine entsprechende Profilierung eingebracht ist. Sie kann aber auch angestaucht sein. Die für die Herstellung verwendeten Streifen können kaltgewalzte Profile sein.

Ausgehend von diesem Stand der Technik betrifft die Erfindung ein Verfahren zum Herstellen eines aus einem Steg und mindestens einem Flansch bestehenden Profilträgers aus Metall, insbesondere Stahl, bei dem ein als Steg dienender erster Metallstreifen mit seiner Schmalseite an einem als Flansch dienenden zweiten Metallstreifen durch Längsnahtschweißung mit Strahlungsenergie angeschweißt wird.

Der Erfindung liegt die Aufgabe zugrunde, ein Verfahren zum Herstellen eines Profilträgers zu schaffen, der bezüglich der Maßhaltigkeit und der Dauerfestigkeit unter Berücksichtigung des Materialeinsatzes bekannten Profilträgern überlegen ist.

Diese Aufgabe wird bei dem Verfahren der vorgenannten Art durch folgende Verfahrensschritte gelöst:
a) der erste Metallstreifen wird an seiner Schmalseite in einer Arrondiervorrichtung kaltverformt und erhält dabei eine ebene Stirnseite,
b) der erste Metallstreifen wird dann in einem Kaltwalzgerüst geglättet,
c) die Längsnahtschweißung erfolgt ohne Zusatzmaterial.

Beim Erfindungsgegenstand wird am nicht verfestigten und deshalb leicht kaltverformbaren Material die ebene Stirnfläche geschaffen, mit der sich der als Steg dienende Streifen ohne Schweißzusatzwerkstoff mit dem anderen, als Flansch dienenden Streifen stumpf durch Strahlungsenergie, insbesondere den Strahl eines Lasers, ohne Nahteinfall verschweißen läßt. Bei Anwendung von Anpreßdruck läßt sich sogar eine Nahtüberhöhung an beiden Seiten von insgesamt 0,1 mal Streifendicke erhalten. Die mit der Kaltverformung bei der Herstellung der ebenen Stirnfläche und dem Glätten und einem eventuellen nachfolgenden Richten einhergehende Verfestigung führt zu einem Profilträger, der bei gleicher Geometrie eine wesentlich verbesserte Dauerfestigkeit als nach herkömmlichen Verfahren hergestellte warmgewalzte Profilträger hat.

Die mit der Kaltverformung einhergehende Verfestigung sollte einer Verfestigung entsprechen, die beim Kaltwalzen einer Dickenreduktion von mindestens 1 % entspricht. Vorzugsweise wird man eine höhere Verfestigung anstreben. Diese läßt sich nicht nur durch das zusätzliche Glätten in einem Walzgerüst, sondern auch noch dadurch vergrößern, daß die Streifen auch an ihren nicht anzuschweißenden Schmalseiten abgerundete Kanten in der Arrondiervorrichtung erhalten. Vergleichende Dauerfestigkeitsuntersuchungen nach Libertiny, Topper und Leis (The Effect of Large Prestrains on Fatigue) an Proben aus kaltverformtem Stahl der Qualität UST 35 und ST 50 haben gezeigt, daß sich mit dem erfindungsgemäßen Profilträger Materialeinsparungen bis zu 40 % erreichen lassen.

Bevor an einer Schmalseite des Streifens eine ebene Stirnfläche und gegebenenfalls an den anderen Schmalseiten der Streifen abgerundete Kanten in der Arrondiervorrichtung hergestellt werden, sollten die Kanten an den Schmalseiten entgratet werden.

Im folgenden wird die Erfindung anhand einer ein Ausführungsbeispiel darstellenden Zeichnung näher erläutert. Im einzelnen zeigen:
- Fig. 1: eine Vorrichtung zur Bearbeitung eines als Steg eines Profilträgers zu verwendenden Streifens,

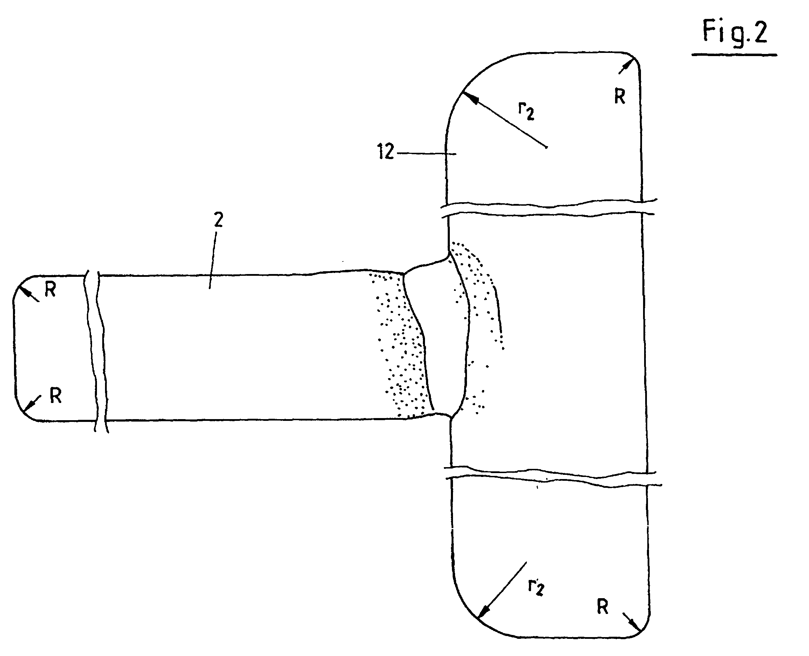

- Fig. 2: einen T-Profilträger im Querschnitt und
- Fig. 3: ein Diagramm über den Einfluß der Kaltverformung durch Walzen auf die Zug-Schwell-Dauerschwingfestigkeit des Profilträgers.

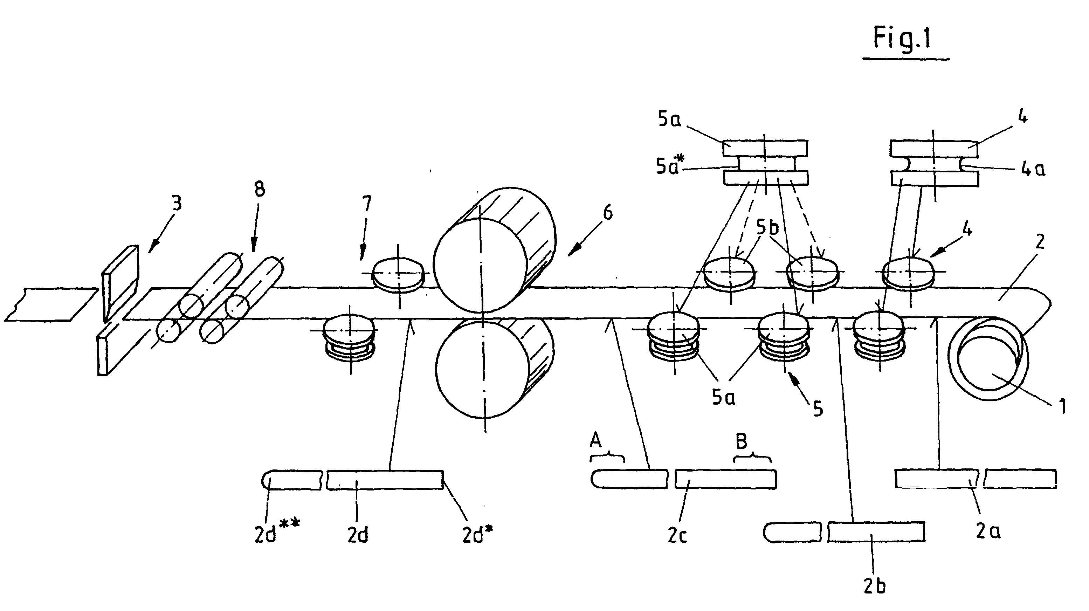

Gemäß Fig. 1 wird von einer Haspel 1 ein Streifen 2 abgewickelt, der dann verschiedenen Bearbeitungen unterworfen wird, um am Ende durch eine Schere 3 auf Teillängen abgeschnitten zu werden.

Der Streifen 2 wird während der Bearbeitung zunächst an den Schmalseiten bearbeitet. Mittels eines ersten Rollenpaares 4, dessen Rollen eine Nut 4a mit abgerundetem Grund aufweisen, werden die Kanten des Streifens 2 entgratet. Das Streifenprofil hat vor dem Rollenpaar 4 das Profil 2a und nach dem Rollenpaar 4 das Profil 2b. Danach läuft der Streifen 2 in eine Arrondiervorrichtung 5 ein, die aus zwei oder mehr Rollenpaaren bestehen kann. Die an der anzuschweißenden Schmalseite wirksamen Rollen 5a weisen eine rechteckige Nut 5a* auf, während die an der nicht anzuschweißenden Schmalseite wirksamen Rollen 5b eine abgerundete Nut 4a haben, wie die beschriebenen Rollen 4. Der die Arrondiervorrichtung 5 verlassende Streifen 2 hat das Profil 2c mit den gestauchten Randbereichen A,B angenommen. Durch diesen Stauchvorgang hat eine erste Kaltverfestigung stattgefunden.

Der nicht plane Streifen 2 gelangt dann in ein Kaltwalzgerüst 6, in dem die gestauchten Randbereiche A,B und gegebenenfalls auch der Streifen 2 mittleren Bereichs in der Dicke reduziert werden. Dadurch erfährt der Streifen 2 eine weitere Kaltverfestigung. Der Streifen verläßt dann mit dem Querschnitt 2d das Kaltwalzgerüst b. An der anzuschweißenden Schmalseite hat er dann eine ebene Stirnfläche 2d*, insbesondere ohne abgerundete Kanten und an der anderen Schmalseite eine abgerundete Stirnfläche 2d**.

Der Streifen 2 gelangt über ein an den Schmalseiten angreifendes, dem Profil der ebenen Stirnseite 2d* und der abgerundeten Stirnseite 2d** angepaßtes Führungsrollenpaar 7 in einen Richtapparat 8, der Welligkeiten im Streifen 2 glättet. Die durch die Schere 3 abgelängten Abschnitte des Streifens 2 stehen dann als kaltverfestigter Steg für die Herstellung des Profilträgers zur Verfügung.

Die Herstellung des für den Flansch zu verwendenden Streifens 12 erfolgt auf entsprechende Art und Weise. Die Herstellung unterscheidet sich dabei nur insofern, als an beiden Stirnseiten abgerundete Kanten mittels der Arrondiervorrichtung 5 geformt werden. Dabei können vorzugsweise an derselben Stirnseite Kanten mit unterschiedlichem Krümmungsradius R,r₂ geformt werden, wie es der Kantengeometrie herkömmlicher T-Profile entspricht.

Nach der Herstellung der beiden Streifen 2 und 12 für den Steg und den Flansch werden die Streifen 2,12 mittels einer Einspannvorrichtung gegeneinandergedrückt und mit einem CO₂-Laser stumpf verschweißt. Da die ebene Stirnseite 2d* an der geglätteten ebenen Breitseite des Streifens 12 zur Anlage gebracht wird, läßt sich die Verschweißung ohne Schweißzusatzwerkstoff durchführen, ohne daß es deshalb zu einem Nahteinfall kommt. Eine Nahtüberhöhung läßt sich gezielt erreichen, wenn der Anpreßdruck und die Prozeßparameter entsprechend hoch eingestellt werden.

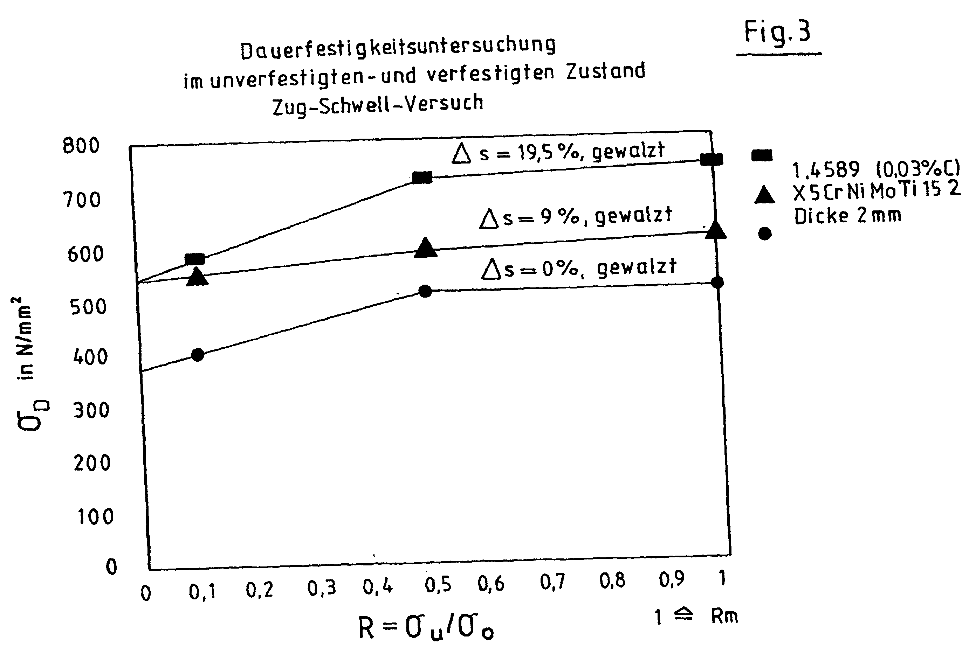

In Fig. 3 ist für verschiedene Kaltwalzgrade ΔS die Zug-Schwell-Dauerschwingfestigkeit für den rostträgen Edelstahl 1.4589, X5CrNiMoTi15 2, dargestellt, der abweichend von der Norm statt eines Gehaltes von 0,05 % C nur 0,03 % C enthält. In dem Diagramm der Fig. 3 wird mit σ_{D} die über den gesamten Querschnitt wirksame Zugspannung der dauernd wirksamen axialen Zugvorlast bezeichnet, um die der Träger beim Versuch der Zug-Schwell-Dauerschwingfestigkeit schwingt und die nach mehr als 2 Millionen Lastspielen ohne Bruch noch ertragen wird. Mit σₒ and σᵤ wird die bei diesem Versuch auftretende maximale und minimale Spannung in den am meisten belasteten weil von der neutralen Achse des Flächenträgheitsmomentes am entferntesten liegenden Bereich des Trägers bezeichnet. Sofern σᵤ = σₒ und damit R = σᵤ/σₒ = 1 ist, liegt keine Schwingung vor. In diesem Fall wird R mit Rₘ beschrieben, das ist dann die Bruch-Zugspannung.

Die Vorteile der Erfindung bestehen vor allem darin, daß mit der Kantenvorbereitung der Streifen durch Kaltverformen eine Kaltverfestigung einhergeht, die der Dauerfestigkeit zugute kommt. Daraus folgt, daß der erfindungsgemäße Profilträger mit einem geringeren Gewicht als ein warmgewalzter Profilträger bei vergleichbarer Belastbarkeit auskommt. Wegen der bei der Kantenvorbereitung stattfindenden Kaltverfestigung entfällt auch die Notwendigkeit, von einem walzharten Band oder einem Band aus einer Qualität mit einer hohen Streckgrenze auszugehen, das in einer für ein solches Band ausreichend dimensionierten Längszerteilanlage geschnitten werden müßte, und dessen Kanten mit für walzharte Bänder geeigneten Werkzeugen angearbeitet werden müßten.

## Patentansprüche

1. Verfahren zum Herstellen eines aus einem Steg und mindestens einem Flansch bestehenden Profilträgers aus Metall, insbesondere Stahl, bei dem ein als Steg dienender erster Metallstreifen (2) mit seiner Schmalseite an einem als Flansch dienenden zweiten Metallstreifen (12) durch Längsnahtschweißung mit Strahlungsenergie angeschweißt wird,
**gekennzeichnet durch**
folgende Verfahrensschritte
a) der erste Metallstreifen (2) wird an seiner Schmalseite in einer Arrondiervorrichtung (5) kaltverformt und erhält dabei eine ebene Stirnseite (2d*),
b) der erste Metallstreifen (2) wird dann in einem Kaltwalzgerüst (6) geglättet,
c) die Längsnahtschweißung erfolgt ohne Zusatzmaterial.

2. Verfahren nach Anspruch 1,
**dadurch gekennzeichnet , daß** der erste Streifen (2) beim Glätten im Kaltwalzgerüst einer Kaltverformung unterworfen wird, die mindestens einer 1 %igen Dickenreduktion des Streifens (2) entspricht.

3. Verfahren nach Anspruch 1 oder 2,
**dadurch gekennzeichnet , daß** der erste Streifen (2) nach dem Glätten im Kaltwalzgerüst (6) in einer Rollenrichtmaschine (8) gerichtet wird.

4. Verfahren nach einem der Ansprüche 1 bis 3,
**dadurch gekennzeichnet , daß** der erste und/oder der zweite Streifen (2,12) an jeder nicht anzuschweißenden Schmalseite in einer Arrondiervorrichtung abgerundete Kanten erhält.

5. Verfahren nach Anspruch 4,
**dadurch gekennzeichnet , daß** der erste und/oder zweite Streifen (2,12) nach der Herstellung der abgerundeten Kanten an jeder nicht anzuschweißenden Schmalseite in einem Walzgerüst geglättet wird.

6. Verfahren nach einem der Ansprüche 1 bis 5,
**dadurch gekennzeichnet , daß** die Schmalseiten des ersten und/oder zweiten Streifens (2,12) vor deren Bearbeiten in der Arrondiervorrichtung (5) für die ebene Stirnfläche und/oder die abgerundeten Kanten an den Kanten entgratet werden.

## Claims

1. A method for manufacturing a structural girder made of metal, especially steel, consisting of a web and at least one flange, where the narrow side of a first metal strip (2) serving as the web is welded to a second metal strip (12) serving as a flange by longitudinal seam welding using radiation energy,
**characterised by** the following process steps
a) the narrow side of the first metal strip (2) is cold-formed in a finishing device (5) and thereby acquires a plane face (2d*),
b) the first metal strip (2) is then smoothed in a cold-rolling stand (6),
c) the longitudinal seam weld is made without any additional material.

2. The method according to Claim 1,
**characterised in that** during smoothing in the cold-rolling stand the first strip (2) is subjected to cold rolling which corresponds to at least a 1% reduction in thickness of the strip (2).

3. The method according to Claim 1 or 2,
**characterised in that** after smoothing in the cold-rolling stand (6) the first strip (2) is directed into a roll straightener (8).

4. The method according to one of Claims 1 to 3,
**characterised in that** at every narrow side not to be welded the first and/or the second strip (2, 12) acquires rounded edges in a finishing device.

5. The method according to Claim 4,
**characterised in that** after the rounded edges have been produced at every narrow side not to be welded, the first and/or second strip (2, 12) is smoothed in a rolling stand.

6. The method according to Claims 1 to 5,
**characterised in that** the narrow sides of the first and/or second strips (2, 12) are deburred at the edges before machining in the finishing device (5) for the plane face and/or the rounded edges.

## Revendications

1. Procédé pour produire un longeron profilé métallique, notamment en acier, constitué d'une traverse et d'au moins une semelle, dans lequel une première bande de métal (2) servant de traverse est soudée sur son chant à une seconde bande de métal (12) servant de semelle par soudage continu longitudinal à énergie rayonnée, **caractérisée par** les étapes suivantes :
a) la première bande de métal (2) est conformée à froid sur son chant dans un dispositif pour arrondir (5) et est pourvue de la sorte d'un côté frontal aplani (2d*),
b) la première bande de métal (2) est ensuite calandrée dans une cage de laminoir à froid (6),
c) le soudage continu longitudinal est effectué sans matière d'addition.

2. Procédé suivant la revendication 1, **caractérisé en ce que** la première bande (2) est soumise à un formage à froid par calandrage dans la cage de laminoir à froid, lequel formage à froid correspond à au moins une réduction d'épaisseur d'un pour cent de la bande (2).

3. Procédé suivant la revendication 1 ou 2, **caractérisé en ce que**, après le calandrage dans la cage de laminoir à froid (6), la première bande (2) est rectifiée dans une machine à dresser à rouleaux (8).

4. Procédé suivant l'une des revendications 1 à 3, **caractérisé en ce que** la première et/ou la seconde bande (2, 12) sont pourvues sur chaque chant qui n'est pas à souder, de bords arrondis dans un dispositif pour arrondir.

5. Procédé suivant la revendication 4, **caractérisé en ce que**, après l'obtention des bords arrondis, la première et/ou la seconde bande (2, 12) sont calandrées sur chaque chant qui n'est pas à souder dans une cage de laminoir.

6. Procédé suivant l'une des revendications 1 à 5, **caractérisé en ce que**, avant leur façonnage dans le dispositif pour arrondir (5), les chants de la première bande (2) et/ou de la seconde bande (12), pour l'obtention des surfaces frontales aplanies et/ou des bords arrondis, sont ébarbés sur les bords.
